# EUROPÄISCHE PATENTANMELDUNG

(11) **EP 1 569 279 A2**
(43) Veröffentlichungstag der Anmeldung: **31.08.2005**
(21) Anmeldenummer: 05003772.0
(22) Anmeldetag: 22.02.2005
(51) Int. Cl.: H01L 31/042, E04D 13/18, F24J 2/52

(54) **Dachträger für Solarmodule**

(30) Priorität: 27.02.2004 DE 202004003001 U
(71) Anmelder: Plambeck Energiekonzept AG, 27472 Cuxhaven (DE)
(72) Erfinder: Brikey, Hans-Jürgen, 27472 Cuxhaven (DE)
(74) Vertreter: Manitz, Finsterwald & Partner GbR

(57) **Zusammenfassung**

Die Erfindung betrifft einen Dachträger für Solar- und Kollektormodule von Photovoltaik- und Solarthermie-Anlagen mit einem bevorzugt plattenförmigen Basisabschnitt zur Befestigung des Trägers an einem Dachstuhl, insbesondere einem Sparren, einem Tragabschnitt zur Abstützung der Module oder einer Modulhalterung, insbesondere einer Schienenunterkonstruktion, und einem Verbindungsabschnitt, über den der Tragabschnitt gegenüber dem Basisabschnitt sowohl seitlich als auch in der Höhe versetzt mit dem Basisabschnitt verbunden ist, wobei der Tragabschnitt mit einer integrierten Anordnung zur Höhenverstellung versehen ist, die wenigstens ein am Tragabschnitt höhenverstellbar angebrachtes Stützelement für die Module oder die Modulhalterung umfasst.

## Beschreibung

Die Erfindung betrifft einen Dachträger für Solar- und Kollektormodule von Photovoltaik- und Solarthermie-Anlagen.

Der Nutzung der Sonnenenergie kommt nicht zuletzt aufgrund staatlicher Förderprogramme sowohl im privaten als auch im gewerblichen Bereich seit einiger Zeit eine immer größere Bedeutung zu. Eine einfache und schnelle Dachmontage der in der Praxis zum Einsatz kommenden Solar- und Kollektormodule ist daher von großer Wichtigkeit.

Verwendung finden bislang sogenannte Dachhaken, die mit dem Dachstuhl verschraubt werden und auf denen wiederum als Halterung für die Module dienende Schienenkonstruktionen angebracht werden. Von Nachteil bei den bekannten Dachhaken ist, dass eine Höhenverstellung der Schienenkonstruktion entweder überhaupt nicht oder nur auf umständliche Weise durch eine entsprechende Anpassung der erforderlichen Schraubverbindungen möglich ist, indem eine entsprechende Anzahl von Zwischenelementen oder Unterlegscheiben verwendet wird. Die Möglichkeit zu einem Höhenausgleich spielt jedoch in der Praxis eine wichtige Rolle, wenn beispielsweise Dachunebenheiten ausgeglichen werden müssen oder die Neigung der Module an die jeweiligen Erfordernisse angepasst werden soll. Die bekannte Methode zur Höhenanpassung führt zu einem beträchtlichen zusätzlichen Zeitaufwand bei der Montage der Module, was die Wirtschaftlichkeit der betreffenden Photovoltaik- bzw. Solarthermie-Anlage insgesamt beeinträchtigen kann.

Aufgabe der Erfindung es daher, eine Möglichkeit zu einer einfachen Dachmontage von Solar- und Kollektormodulen zu schaffen, die gleichzeitig eine einfache und schnelle Höhenanpassung gestattet.

Die Lösung dieser Aufgabe erfolgt durch die Merkmale des Anspruchs 1 und insbesondere dadurch, dass der Dachträger einen bevorzugt plattenförmigen Basisabschnitt zur Befestigung des Trägers an einem Dachstuhl, insbesondere einem Sparren, einen Tragabschnitt zur Abstützung der Module oder einer Modulhalterung, insbesondere einer Schienenunterkonstruktion, und einen Verbindungsabschnitt umfasst, über den der Tragabschnitt gegenüber dem Basisabschnitt sowohl seitlich als auch in der Höhe versetzt mit dem Basisabschnitt verbunden ist, wobei der Tragabschnitt mit einer integrierten Anordnung zur Höhenverstellung versehen ist, die wenigstens ein am Tragabschnitt höhenverstellbar angebrachtes Stützelement für die Module oder die Modulhalterung umfasst.

Der erfindungsgemäße Dachträger kann aufgrund seiner versetzten Anordnung von Basisabschnitt einerseits und Tragabschnitt andererseits insbesondere an mit Dachziegeln gedeckten Dächern eingesetzt werden und ermöglicht durch seine das höhenverstellbare Stützelement umfassende integrierte Verstellanordnung eine einfache und schnelle Höhenanpassung für das jeweilige Modul bzw. die jeweilige Modulhalterung. Insbesondere werden aufgrund der Integration der Höhenverstellung in den Dachträger keine zusätzlichen separaten Teile wie Zwischenelemente oder Unterlegscheiben benötigt, was bereits die Dachmontage an sich erheblich vereinfacht und überdies eine schnelle Höhenanpassung ermöglicht.

Bevorzugte Ausführungsformen der Erfindung sind in den abhängigen Ansprüchen, der Beschreibung sowie der Zeichnung angegeben.

Besonders vorteilhaft ist es, wenn gemäß einem Ausführungsbeispiel das Stützelement sowohl vor der Dachmontage als auch bei am Dachstuhl befestigtem Träger in der Höhe verstellbar ist. Auf diese Weise kann an den Dachträgern gemäß einer individuellen Montageplanung bereits vor der eigentlichen Dachmontage die jeweils erforderliche Höheneinstellung vorgenommen werden. Auf dem Dach sind dann im Anschluss an die Befestigung der Dachträger an dem Dachstuhl lediglich noch die Module bzw. die Modulhalterung an den Tragabschnitten der Dachträger anzubringen, wobei dies keine weitere Höhenanpassung oder allenfalls eine abschließende Feineinstellung erfordert.

Vorzugsweise umfasst der Tragabschnitt einen insbesondere an einem Gewindebolzen ausgebildeten Gewindeabschnitt, wobei das Stützelement auf den Gewindeabschnitt schraubbar ist. Das Stützelement ist vorzugsweise eine Mutter.

Hierdurch wird auf denkbar einfache und dennoch mechanisch stabile und zuverlässige Weise eine stufenlos höhenverstellbare Abstützung für die Module bzw. deren Haltung geschaffen.

Ferner wird erfindungsgemäß vorgeschlagen, eine Fixiereinrichtung vorzusehen, mit der ein Modul oder zumindest ein Teil einer Modulhalterung am Tragabschnitt in einer Sollhöhe fixierbar ist.

Insbesondere ist die Fixiereinrichtung derart ausgebildet, dass das Modul bzw. die Modulhalterung zwischen der Fixiereinrichtung und dem Stützelement festgeklemmt werden kann.

Vorzugsweise ist die Fixiereinrichtung auf einen Gewindeabschnitt des Tragabschnitts schraubbar, wobei die Fixiereinrichtung insbesondere eine Mutter ist. Erfindungsgemäß kann folglich eine Fixierung der Module bzw. deren Halterung in einer Sollhöhe einfach durch Einspannen zwischen zwei auf einen Gewindebolzen geschraubten Muttern erfolgen, wobei die Position der unteren Mutter das Höhenniveau vorgibt.

Gemäß einem weiteren bevorzugten Ausführungsbeispiel der Erfindung weist der Verbindungsabschnitt eine an den Überlappungsbereich von Dachziegeln angepasste Form auf. Insbesondere ist der Verbindungsabschnitt etwa S-förmig ausgebildet. Hierdurch kann der Tragabschnitt des Dachträgers gegenüber dem zur Befestigung am Dachstuhl unter den Dachziegeln gelegenen Basisabschnitt versetzt oberhalb der Dachziegeln positioniert werden, d.h. der Dachträger "schlängelt" sich gewissermaßen durch die einander überlappenden Dachziegeln hindurch.

In einer bevorzugten Ausführungsform weist der Verbindungsabschnitt einen im Wesentlichen ebenen Mittelabschnitt auf, von dem an gegenüberliegenden Enden und in zumindest näherungsweise entgegengesetzte Richtungen zwei Abstandsstücke abstehen, von denen das eine mit dem Basisabschnitt und das andere mit dem Tragabschnitt verbunden ist.

Der Verbindungsabschnitt kann von einem mehrfach abgewinkelten, insbesondere streifenförmigen Metalltafelelement gebildet sein.

Ferner ist bevorzugt vorgesehen, dass der Tragabschnitt, insbesondere ein Gewindebolzen des Tragabschnitts, seitlich mit einem abstehenden Abstandsstück und an seinem unteren Ende mit dem Mittelabschnitt des Verbindungsabschnitts verbunden ist, insbesondere durch Verschweißen oder Löten. Durch ein derartiges Einpassen des Tragabschnitts in einen Winkelabschnitt des Verbindungsabschnitts wird eine besonders stabile Anbindung des Tragabschnitts an den Verbindungsabschnitt erzielt.

Die Erfindung betrifft außerdem eine Tragkonstruktion für Solar- und Kollektormodule von Photovoltaik- und Solarthermie-Anlagen mit einer Mehrzahl von erfindungsgemäß ausgebildeten Dachträgern sowie einer Modulhalterung, die an den Stützelementen der Tragabschnitte der Dachträger abstützbar ist.

Die Modulhalterung ist vorzugsweise in Form einer Schienenunterkonstruktion vorgesehen, wobei die Schienenunterkonstruktion als gitterartiges Schienentragwerk ausgebildet sein kann.

Die Erfindung wird im Folgenden beispielhaft unter Bezugnahme auf die Zeichnung beschrieben. Es zeigen:
- Fig. 1: eine Seitenansicht eines Dachträgers gemäß einer Ausführungsform der Erfindung,
- Fig. 2: eine Draufsicht auf den Dachträger von Fig. 1 ohne Muttern, und
- Fig. 3: in einer Seitenansicht die Anordnung erfindungsgemäßer Dachträger an einem Dachstuhl als Bestandteile einer Tragkonstruktion für Solar- und Kollektormodule.

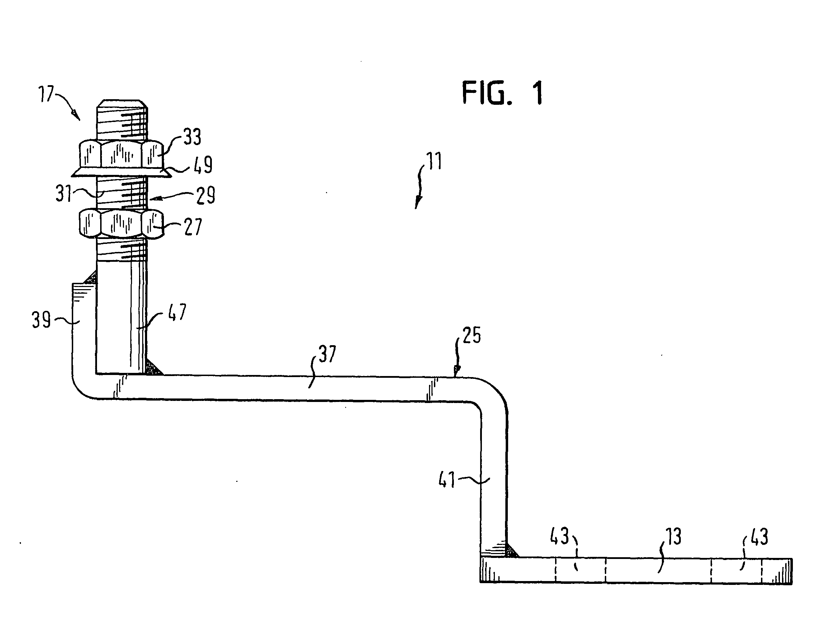

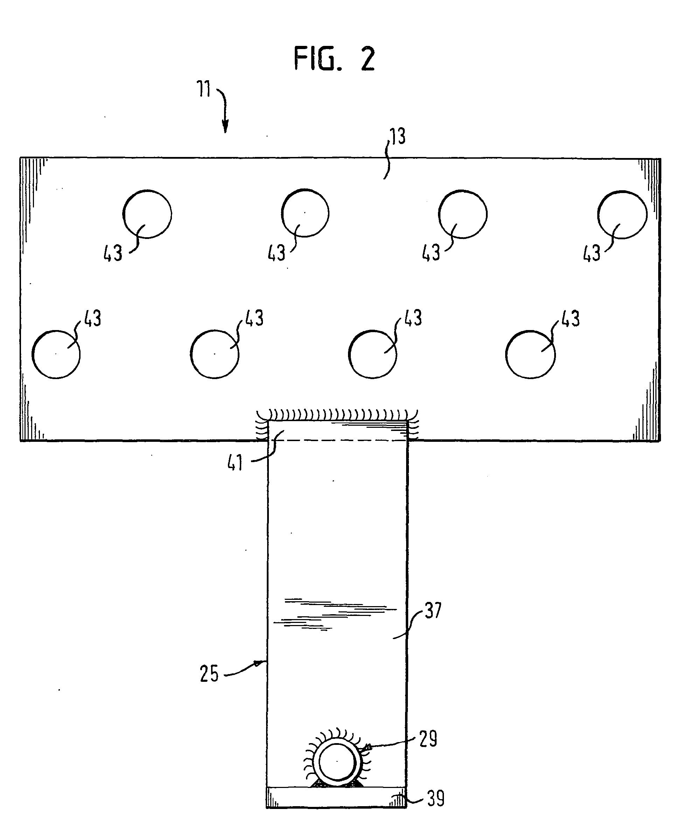

Der in Fig. 1 und 2 dargestellte erfindungsgemäße Dachträger 11 umfasst als Basisabschnitt 13 eine rechteckige Grund- oder Fußplatte mit einer Mehrzahl von Bohrungen 43, die in diesem Ausführungsbeispiel in zwei gegeneinander versetzt angeordneten Bohrlochreihen angeordnet sind. Mit der Fußplatte 13 mittig an einer der Längsseiten verbunden ist ein durch zweifaches Abwinkeln eines streifenförmigen Tafelelementes hergestellter, eine im Wesentlichen S-Form aufweisender Verbindungsabschnitt 25. Ein ebener Mittelabschnitt 37 des Verbindungsabschnitts 25 verläuft parallel versetzt zur Fußplatte 13 und ist über ein rechtwinklig vom Mittelabschnitt 37 abstehendes Abstandsstück 41 mit der Fußplatte 13 verbunden.

Am anderen Ende des Mittelabschnitts 37 steht in die entgegengesetzte Richtung ein weiteres Abstandsstück 39 rechtwinklig ab.

An den hierdurch entstehenden Winkel ist an der Innenseite mittig mit einem gewindefreien Abschnitt 47 ein Gewindebolzen 29 verbunden, auf den als Stützelement und Fixiereinrichtung dienende, in Fig. 2 nicht dargestellte Muttern 27, 33 geschraubt sind. Anders als die Stützmutter 27 ist die Fixiermutter 33 an ihrer der Stützmutter 27 zugewandten Seite mit einem radial abstehenden Kragen 49 versehen.

Als Material für die Fußplatte 13, den Verbindungsabschnitt 25 sowie den Gewindebolzen 29 wird insbesondere Stahl (z.B. V2A) verwendet.

Die Abmessungen des Dachträgers 11, insbesondere die Länge des Mittelabschnitts 37 des Verbindungsabschnitts 25, die Höhe der Abstandsstücke 39, 41 des Verbindungsabschnitts 25 sowie die Länge des Gewindebolzens 29, werden in Abhängigkeit von dem jeweiligen Anwendungsfall gewählt. Vorzugsweise umfasst die Erfindung mehrere Sätze von unterschiedliche Abmessungen aufweisenden Dachträgern.

Die Anbindung der Fußplatte 13 an das Abstandsstück 41 einerseits und des Gewindebolzens 29 an den Verbindungsabschnitt 25 andererseits erfolgt vorzugsweise durch Verschweißen oder Löten.

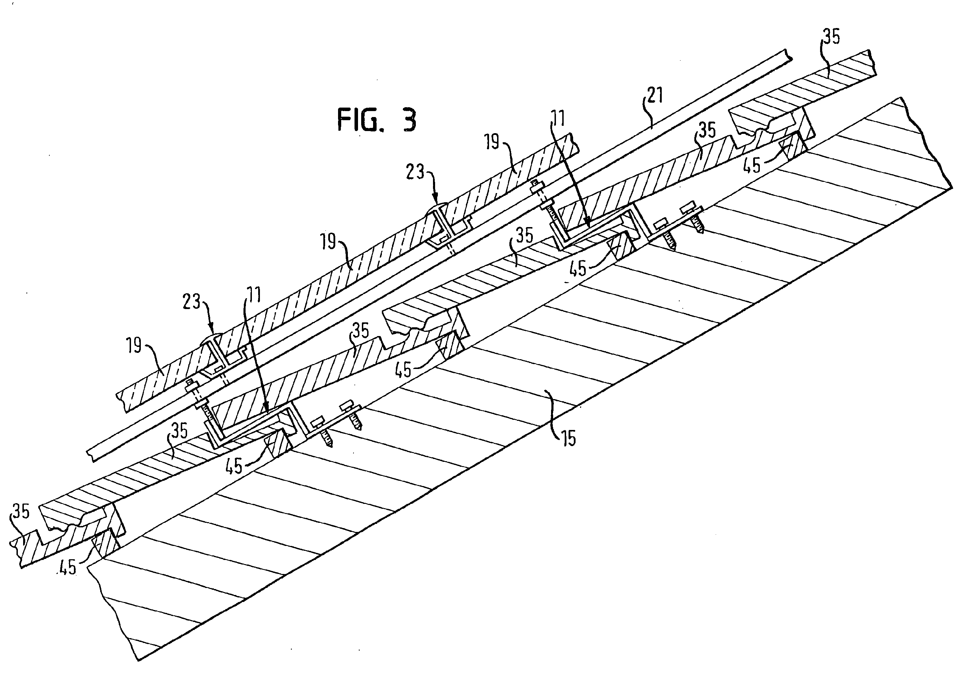

Fig. 3 zeigt ein Anwendungsbeispiel für den erfindungsgemäßen Dachträger.

Der Dachträger ist Bestandteil einer Tragkonstruktion, die zusätzlich zu einer Mehrzahl von erfindungsgemäßen Dachträgern 11 insbesondere jeweils eine U-Form aufweisende Profilschienen 21 sowie quer zu den Profilschienen 21 verlaufende Halteschienen 23 umfasst.

Die Profilschienen 21 werden auch als Vertikalschienen bezeichnet, obwohl sie entsprechend der Dachneigung schräg zur Vertikalen verlaufen. Die horizontal verlaufenden Halteschienen 23 dienen zur randseitigen Aufnahme der in Fig. 3 lediglich schematisch dargestellten Solarmodule einer Photovoltaik-Anlage bzw. Kollektormodule einer Solarthermie-Anlage und sind auf die Profilschienen 21 geschraubt. Die Halteschienen 23 und Profilschienen 21 bilden somit eine Schienenunterkonstruktion für die Module 19 in Form eines gitterartigen Schienentragwerks.

Die Profilschienen 21 sind mit den Gewindebolzen 29 der erfindungsgemäßen, jeweils mit ihren Fußplatten 13 über die Bohrungen 43 auf die Sparren 15 geschraubten (Fig. 1) Dachträger 11 gekoppelt. Hierzu sind in den Profilschienen 21 nicht dargestellte Bohrungen ausgebildet, mit denen die Profilschienen 21 auf die Gewindebolzen 29 gesteckt sind, so dass sich die Profilschienen 21 jeweils an den als Stützelement dienenden unteren Muttern 27 (Fig. 1) abstützen.

Die Stützmuttern 27 können bereits vor der Dachmontage in die jeweils gewünschte Höhenlage an den Gewindebolzen 29 gebracht werden, so dass die Profilschienen 21 lediglich noch auf die Gewindebolzen 29 aufgesteckt werden müssen.

Die erfindungsgemäßen Dachträger 11 ermöglichen aber auch bei bereits mit dem Dachstuhl ― im Ausführungsbeispiel der Fig. 3 mit den Sparren 15 - verschraubten Dachträgern 11 eine Höhenanpassung einfach durch Verdrehen der Stützmuttern 27. Dieser Höhenausgleich kann selbst bei aufgesteckten Profilschienen 21 bzw. aufgestecktem Schienentragwerk 21, 23 erfolgen, da die Stützmuttern 27 bei noch nicht in die Halteschienen 23 eingesetzten Modulen 19 zugänglich bleiben.

Erfindungsgemäß kann folglich auf extrem einfache und äußerst schnelle Weise der Verlauf der Profilschienen 21 und damit die Ausrichtung der Module 19 relativ zu dem Dachziegelverbund 35 und relativ zu dem Verlauf der Sparren 15 stufenlos eingestellt werden.

Sobald mittels der Stützmuttern 27 die gewünschte Höhenlage am Gewindebolzen 29 eingestellt ist, können die aufgesteckten Profilschienen 21 bzw. das aufgesteckte Schienentragwerk 21, 23 durch Aufschrauben der Fixiermuttern 33 (Fig. 1) an den Dachträgern 11 fixiert werden.

In Abhängigkeit von den jeweils verwendeten, auf den senkrecht zu den Sparren 15 verlaufenden Dachlatten 45 aufliegenden Dachziegeln 35 werden die Abmessungen der erfindungsgemäßen Dachträger 11 derart gewählt, dass der Verlauf des den räumlichen Versatz zwischen Fußplatte 13 und Gewindebolzen 29 herstellenden Verbindungsabschnitts 25 optimal an den Überlappungsbereich zwischen zwei aufeinanderfolgenden Dachziegeln 35 angepasst ist.

### Bezugszeichenliste

- 11: Dachträger
- 13: Baissabschnitt, Fußplatte
- 15: Sparren
- 17: Tragabschnitt
- 19: Modul
- 21: Profilschiene
- 23: Halteschiene
- 25: Verbindungsabschnitt
- 27: Stützelement, Mutter
- 29: Gewindebolzen
- 31: Gewindeabschnitt
- 33: Fixiereinrichtung, Mutter
- 35: Dachziegel
- 37: Mittelabschnitt des Verbindungsabschnitts
- 39: Abstandsstück des Verbindungsabschnitts
- 41: Abstandsstück des Verbindungsabschnitts
- 43: Bohrung
- 45: Dachlatte
- 47: gewindefreier Abschnitt des Gewindebolzens
- 49: Kragen der Fixiereinrichtung

## Patentansprüche

1. Dachträger für Solar- und Kollektormodule von Photovoltaik- und Solarthermie-Anlagen mit
- einem bevorzugt plattenförmigen Basisabschnitt (13) zur Befestigung des Trägers (11) an einem Dachstuhl, insbesondere einem Sparren (15),
- einem Tragabschnitt (17) zur Abstützung der Module (19) oder einer Modulhalterung (21, 23), insbesondere einer Schienenunterkonstruktion, und
- einem Verbindungsabschnitt (25), über den der Tragabschnitt (17) gegenüber dem Basisabschnitt (13) sowohl seitlich als auch in der Höhe versetzt mit dem Basisabschnitt (13) verbunden ist,
wobei der Tragabschnitt (17) mit einer integrierten Anordnung (27, 29) zur Höhenverstellung versehen ist, die wenigstens ein am Tragabschnitt (17) höhenverstellbar angebrachtes Stützelement (27) für die Module (19) oder die Modulhalterung (21, 23) umfasst.

2. Dachträger nach Anspruch 1,
**dadurch gekennzeichnet,**
**dass** das Stützelement (27) sowohl vor der Dachmontage als auch bei am Dachstuhl befestigtem Träger (11) in der Höhe verstellbar ist.

3. Dachträger nach Anspruch 1 oder 2,
**dadurch gekennzeichnet,**
**dass** der Tragabschnitt (17) einen insbesondere an einem Gewindebolzen (29) ausgebildeten Gewindeabschnitt (31) umfasst und das Stützelement (27) auf den Gewindeabschnitt (31) schraubbar ist.

4. Dachträger nach einem der vorhergehenden Ansprüche,
**dadurch gekennzeichnet,**
**dass** das Stützelement (27) eine Mutter ist.

5. Dachträger nach einem der vorhergehenden Ansprüche,
**dadurch gekennzeichnet,**
**dass** eine Fixiereinrichtung (33) vorgesehen ist, mit der ein Modul (19) oder zumindest ein Teil einer Modulhalterung (21, 23) am Tragabschnitt (17) in einer Sollhöhe fixierbar ist.

6. Dachträger nach Anspruch 5,
**dadurch gekennzeichnet,**
**dass** das Modul (19) bzw. die Modulhalterung (21, 23) zwischen der Fixiereinrichtung (33) und dem Stützelement (27) festklemmbar ist.

7. Dachträger nach Anspruch 5 oder 6,
**dadurch gekennzeichnet,**
**dass** die Fixiereinrichtung (33) auf einen Gewindeabschnitt (31) des Tragabschnitts (17) schraubbar ist.

8. Dachträger nach einem der Ansprüche 5 bis 7,
**dadurch gekennzeichnet,**
**dass** die Fixiereinrichtung (33) eine Mutter ist.

9. Dachträger nach einem der vorhergehenden Ansprüche,
**dadurch gekennzeichnet,**
**dass** der Verbindungsabschnitt (25) eine an den Überlappungsbereich von Dachziegeln (35) angepasste Form aufweist.

10. Dachträger nach einem der vorhergehenden Ansprüche,
**dadurch gekennzeichnet,**
**dass** der Verbindungsabschnitt (25) einen etwa S-förmigen Verlauf aufweist.

11. Dachträger nach einem der vorhergehenden Ansprüche,
**dadurch gekennzeichnet,**
**dass** der Verbindungsabschnitt (25) ein mehrfach abgewinkeltes, insbesondere streifenförmiges Metalltafelelement ist.

12. Dachträger nach einem der vorhergehenden Ansprüche,
**dadurch gekennzeichnet,**
**dass** der Verbindungsabschnitt (25) einen im Wesentlichen ebenen Mittelabschnitt (37) aufweist, von dem an gegenüberliegenden Enden und in zumindest näherungsweise entgegen gesetzte Richtungen zwei Abstandsstücke (39, 41) abstehen, von denen das eine mit dem Basisabschnitt (13) und das andere mit dem Tragabschnitt (17) verbunden ist.

13. Dachträger nach Anspruch 12,
**dadurch gekennzeichnet,**
**dass** der Tragabschnitt (17), insbesondere ein Gewindebolzen (29) des Tragabschnitts (17), seitlich mit einem abstehenden Abstandsstück (39) und an seinem unteren Ende mit dem Mittelabschnitt (37) des Verbindungsabschnitts (25) verbunden ist, insbesondere durch Verschweißen oder Löten.

14. Tragkonstruktion für Solar- und Kollektormodule von Photovoltaik- und Solarthermie-Anlagen mit einer Mehrzahl von Dachträgern (11) nach einem der vorhergehenden Ansprüche und einer Modulhalterung (21, 23), die an den Stützelementen (27) der Tragabschnitte (17) der Dachträger (11) abstützbar ist.

15. Tragkonstruktion nach Anspruch 14,
**dadurch gekennzeichnet,**
**dass** die Modulhalterung (21, 23) in Form einer Schienenunterkonstruktion vorgesehen ist.

16. Tragkonstruktion nach Anspruch 15,
**dadurch gekennzeichnet,**
**dass** die Schienenunterkonstruktion (21, 23) als gitterartiges Schienentragwerk ausgebildet ist.
